# EUROPEAN PATENT APPLICATION

(11) **EP 4 773 001 A1**
(43) Date of publication of application: **08.07.2026**
(21) Application number: 24858523.4
(22) Date of filing: 26.08.2024
(51) Int. Cl.: G06F 9/451, G06F 3/0482, G06F 3/04842, G06F 16/958

(54) **MEDIA INTERACTION METHOD AND APPARATUS, AND DEVICE AND STORAGE MEDIUM**

(30) Priority: 30.08.2023 CN 202311110628
(71) Applicant: Beijing Zitiao Network Technology Co., Ltd., Beijing 100190 (CN)
(72) Inventor: ZHANG, Jialin, Beijing 100028 (CN); LI, Yang, Beijing 100028 (CN); WU, Yanbo, Los Angeles, California 90066 (US); ZHAO, Xiaotong, Beijing 100028 (CN); WANG, Ying, Beijing 100028 (CN); WANG, Ding, Beijing 100028 (CN); WANG, Xiangyu, Beijing 100028 (CN); WANG, Xu, Beijing 100028 (CN); HE, Xiaoliang, Beijing 100028 (CN); HUANG, XiZhou, Beijing 100028 (CN)
(74) Representative: Grünecker Patent- und Rechtsanwälte PartG mbB
(86) International application number: PCT/CN2024/114563
(87) International publication number: WO 2025/044987

(57) **Abstract**

Embodiments of the disclosure provides a method, apparatus, device and storage medium for media interaction. The method includes the steps of presenting activity information related to an activity for a first media content and an interaction control for participating in the activity; presenting a content shooting page associated with a preset segment of the first media content in response to a trigger operation by a user on the interaction control; and posting second media content including the preset segment based on an interaction operation by the user on the content shooting page. Therefore, the content shooting path is automatically provided for the user participating in the activity, thereby reducing the operation complexity of the user participating in the activity, and improving the user experience of paticipating in the activity.

## Description

This application claims the benefits of Chinese Patent Application No. 202311110628.2, entitled "Method, Apparatus, Device and Storage Medium for Media Interaction" filed on August 30, 2023, the entire content of which is incorporated herein by reference.

### FIELD

Example embodiments of the present disclosure generally relate to the field of computers, and in particular, to a method, apparatus, device, and computer-readable storage medium for media interaction.

### BACKGROUND

Currently, more and more applications are designed to provide various services to users. The user may perform various operations on the application. For example, a content sharing application is widely used due to characteristics such as simple operation and abundant resources. Such content sharing applications may present one or more media content to a user for viewing by the user. In such a content sharing application, an activity is sometimes initiated to collect media content from a user.

### SUMMARY

In a first aspect of the present disclosure, a method for media interaction is provided. The method includes: presenting activity information related to an activity for a first media content and an interaction control for participating in the activity; presenting a content shooting page associated with a preset segment of the first media content in response to a trigger operation by a user on the interaction control; and posting second media content including the preset segment based on the interaction operation by the user on the content shooting page.

In a second aspect of the present disclosure, an apparatus for media interaction is provided. The apparatus includes: a first presentation module configured to present activity information related to an activity for a first media content and an interaction control for participating in an activity; a second presentation module configured to present a content shooting page associated with a preset segment of the first media content in response to a trigger operation by a user on the interaction control; and a content posting module configured to post a second media content including the preset segment based on an interaction operation by the user on the content shooting page.

In a third aspect of the present disclosure, an electronic device is provided. The device includes at least one processing unit; and at least one memory coupled to the at least one processing unit and storing instructions for execution by the at least one processing unit. The instructions, when executed by the at least one processing unit, cause the device to perform the method of the first aspect.

In a fourth aspect of the present disclosure, a computer-readable storage medium is provided. The computer-readable storage medium having stored thereon a computer program executable by a processor to implement the method of the first aspect.

It should be understood that the content described in the summary of the present disclosure is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numerals refer to the same or similar elements, in which:
FIG. 1 illustrates a schematic diagram of an example environment in which embodiments of the present disclosure can be implemented;
FIGS. 2A to 2D respectively illustrate schematic diagrams of example pages of an activity information posting page for collecting media content via a profile page of a user according to some embodiments of the present disclosure;
FIG. 3 illustrates a schematic diagram of an activity information posting page according to some embodiments of the present disclosure;
FIG. 4A and FIG. 4B respectively illustrate schematic diagrams of an activity description page according to some embodiments of the present disclosure;
FIG. 5 illustrates a schematic diagram of a media content description page according to some embodiments of the present disclosure;
FIG. 6A illustrates a schematic diagram of a control for content uploading according to some embodiments of the present disclosure;
FIG. 6B illustrates a schematic diagram of a content shooting page according to some embodiments of the present disclosure;
FIG. 6C illustrates a schematic diagram of a content selection page in which a user has posted media content according to some embodiments of the present disclosure;
FIG. 7A illustrates a schematic diagram of an activity overview page according to some embodiments of the present disclosure;
FIG. 7B illustrates a schematic diagram of a submitting overview page according to some embodiments of the present disclosure;
FIG. 8A illustrates a schematic diagram of a setting page related to incentives for participating in the activity according to some embodiments of the present disclosure;
FIG. 8B illustrates a schematic diagram of an inspection page for a provision path of an incentive according to some embodiments of the present disclosure;
FIG. 9A illustrates a schematic diagram of an activity page according to some embodiments of the present disclosure;
FIG. 9B illustrates a schematic diagram of a page for presenting media content options according to some embodiments of the present disclosure;
FIG. 10 illustrates a flowchart of a media interaction process according to some embodiments of the present disclosure;
FIG. 11 illustrates a block diagram of an apparatus for media interaction according to some embodiments of the present disclosure; and
FIG. 12 illustrates a block diagram of a device capable of implementing various embodiments of the present disclosure.

### DETAILED DESCRIPTION

It can be understood that, before the technical solutions disclosed in the embodiments of the present disclosure are used, the types of personal information, the usage scope, the usage scenario and the like related to the present disclosure should be notified to the user and the authorization of the user is obtained in an appropriate manner according to the relevant laws and regulations.

For example, in response to receiving an active request from a user, prompt information is sent to the user to explicitly prompt the user that the requested operation will need to obtain and use the personal information of the user. Thus, the user may autonomously select whether to provide the personal information to software or hardware such as an electronic device, an application program, a server or a storage medium and the like, which performs the operation of the technical solution of the present disclosure, according to the prompt information.

As an alternative but non-limiting implementation, in response to receiving the active request of the user, the manner of sending the prompt information to the user may be, for example, a pop-up window, and the prompt information may be presented in a text manner in the pop-up window. In addition, the pop-up window may further carry a selection control for the user to select "agree" or "disagree" to provide personal information to the electronic device.

It may be understood that the above notification and the obtaining process of user authorization are merely illustrative, and do not constitute a limitation on implementations of the present disclosure, and other ways of satisfying relevant laws and regulations may also be applied to the implementations of the present disclosure.

It may be understood that the data involved in the technical solution (including but not limited to the data itself, the obtaining or use of the data) should follow the requirements of the corresponding laws and regulations and relevant provisions.

Embodiments of the present disclosure will be described in more detail below with reference to the accompanying drawings. While certain embodiments of the present disclosure are shown in the accompanying drawings, it should be understood that the present disclosure may be implemented in various forms, and should not be construed as limited to the embodiments set forth herein, but rather, these embodiments are provided for a more thorough and complete understanding of the present disclosure. It should be understood that the drawings and embodiments of the present disclosure are for illustrated purposes only and are not intended to limit the scope of the present disclosure.

It should be noted that the title of any section/subsection provided herein is not limiting. Various embodiments are described throughout and any type of embodiments may be included in any section/subsection. Furthermore, the embodiments described in any section/subsection may be combined in any manner with the same section/subsection and/or any other embodiment described in different sections/subsections.

In the description of the embodiments of the present disclosure, the terms "comprising/including" and the like should be understood to be open-ended, that is, "including but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below. The terms "first," "second," and the like may refer to different or identical objects. Other explicit and implicit definitions may also be included below.

The term "in response to" means that a corresponding event occurs or a condition is satisfied. It will be appreciated that the timing of execution of subsequent actions performed in response to the event or the condition is not necessarily strongly correlated with the time at which the event occurs or the condition is satisfied. In some cases, subsequent actions may be performed immediately when an event occurs or a condition is established. In other cases, subsequent actions may also be performed after a period of time after an event occurs or a condition is established.

As used herein, "media" or "media content" may include a variety of forms of content, such as music, video (e.g., including short videos, movies, teleplay, etc.), images, text, dramas, variety shows, and the like. "Media content" may be a single media item (e.g., a single song), or may be a media album (e.g., a song album) that is a collection of multiple media items.

An activity that a user may participate in some existing content sharing applications usually has a corresponding activity page. If participating in the activity, the user needs to prepare the content that is prepared to participate in the activity outside the application and save the content in the device (e.g., a mobile phone) where the application is located, and then upload the content saved in the mobile phone through the activity page to participate in the activity. Such an operation is cumbersome for the user, reducing the enthusiasm of the user for participating in activities within the application.

To this end, embodiments of the present disclosure provide a media interaction solution. In this solution, activity information related to an activity for a first media content and an interaction control for participating in the activity are presented. If the interaction control is triggered by the user, a content shooting page associated with a preset segment of the first media content is presented. The posting of second media content including the preset segment is implemented based on the interaction operation by the user on the content shooting page.

In the embodiments of the present disclosure, the user directly triggers the presentation of the content shooting page through the interaction control related to the activity, and can directly participate in the related activities without jumping to the outside of the application to shoot the content. This reduces the operational complexity of user participated activities. In this way, a convenient and efficient activity participation mode is provided for a user, so that the user experience of participating in an activity is improved, while the activity participation degree is improved.

Some illustrative embodiments of the present disclosure will be described below with continued reference to the accompanying drawings.

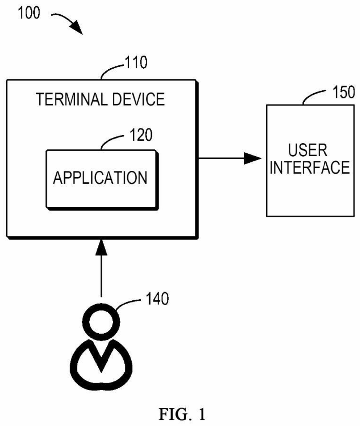

FIG. 1 illustrates a schematic diagram of an example environment 100 in which embodiments of the present disclosure can be implemented. In this example environment 100, an application 120 is installed in an electronic device 110. A user 140 may interact with the application 120 via the electronic device 110 and/or an attachment device of the electronic device 110. The application 120 may be an application of the content sharing category, and can provide related services for sharing content to the user 140, including browsing, playing, commenting, forwarding, creating, posting, and the like of the content, so that the user can share content on the application and obtain content shared by other users on the application, and the like.

In the environment 100 of FIG. 1, if the application 120 is in an active state, the electronic device 110 may present a user interface 150 of the application 120 to the user 140. The user interface 150 may include various types of pages that can be provided by the application 120, such as a playback page of content, a page for content sharing, an activity details page related to various activities, a page for activity participation, and the like. Further, in some embodiments, the user interface 150 may additionally provide a presentation page of content, a content creating page, a content editing page, a message page, a personal page, and/or a mall page, and the like.

The electronic device 110 may be any type of mobile terminal, fixed terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camcorder, a positioning device, a television receiver, a radio broadcast receiver, an electronic book device, a gaming device, or any combination of the foregoing, accessories and peripherals including these devices, or any combination thereof. In some embodiments, the electronic device 110 may also support any type of interface for a user (such as a "wearable" circuit, etc.).

It should be understood that the structure and functions of the environment 100 are described for illustrative purposes only and do not imply any limitation to the scope of the present disclosure.

### Illustrative User Interface

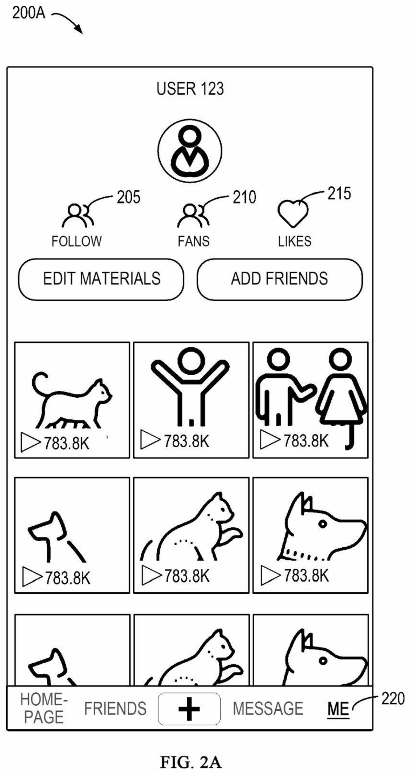

FIGS. 2A to 2D illustrate schematic diagrams of illustrative pages of an activity information posting page for collecting media content via a profile page of a user according to some embodiments of the present disclosure. For ease of discussion, the various processes of FIGS. 2A to 2D will be described with reference to the environment 100 of FIG. 1. In some embodiments, the user may enter an activity information posting page for collecting media content via a corresponding control of a profile page.

In some embodiments, after the user logs into the application 120, a profile page of the user may be presented in the user interface 150. FIG. 2A illustrates a schematic diagram of a profile page 200A of a user according to some embodiments of the present disclosure. As shown in FIG. 2A, the profile page 200A is presented with information related to a user (e.g., user 123). The information related to the user may include, for example, a user name of the user, a number 205 of follows of the user, a number 210 of fans of the user, content 215 that the user likes, and content posted by the user to the application, etc. In the profile page 200A of the user, a corresponding tool option may be presented by triggering a control for presenting tool options. For example, after a user clicks on a control, such as "Me" control 220, the corresponding tool included in the next level option of the control 220 will be presented.

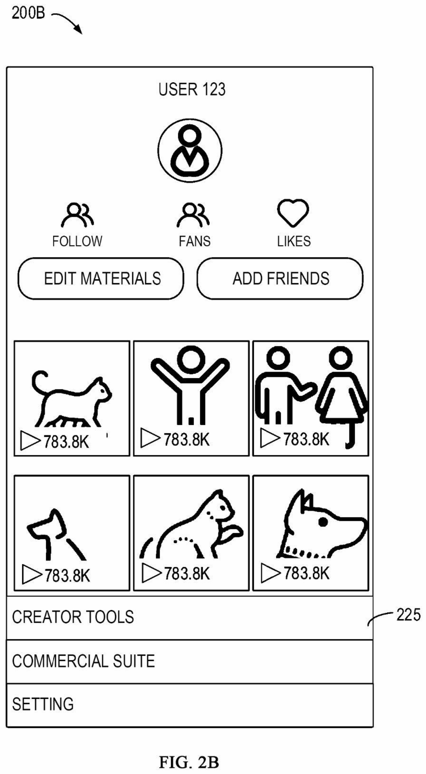

FIG. 2B illustrates a schematic diagram of a page 200B for a presentation tool according to some embodiments of the present disclosure. As shown in FIG. 2B, in response to a user triggering a control for presenting a tool option, one or more tool options are presented. The presented tool options may include, for example, an author tool 225, a business suite, settings, and the like. For example, if the creator tool 225 is triggered to operate, a page associated with the creator tool 225 is presented.

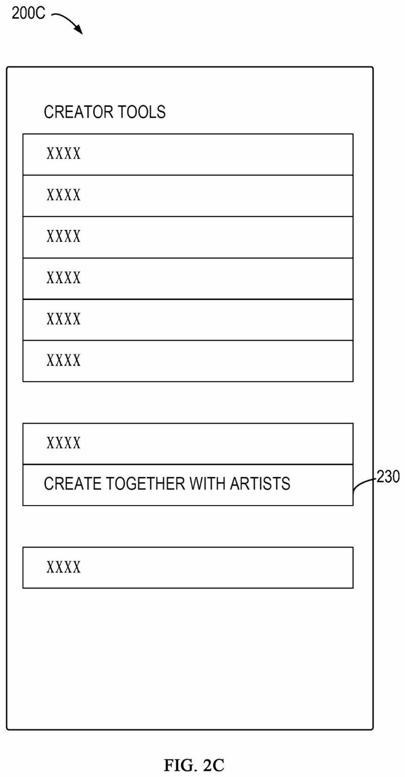

FIG. 2C illustrates a schematic diagram of a creator tool page 200C according to some embodiments of the present disclosure. As shown in FIG. 2C, in the page 200C associated with the creator tool 225 that is triggered to be presented, a control 230 for entering the activity information posting page for collecting media content is presented. A user may use one of functions of the application 120 to enter the activity information posting page (e.g., creating with an artist) through triggering the control 230. After the control 230 is triggered, the user may enter a details page of this function provided by the application 120.

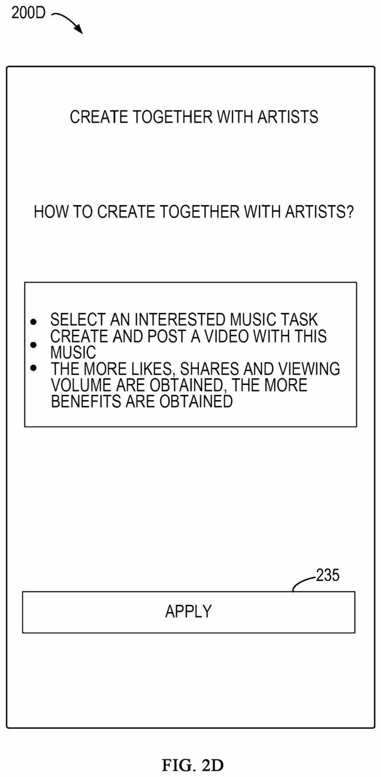

FIG. 2D illustrates a schematic diagram of a function details page 200D according to some embodiments of the present disclosure. As shown in FIG. 2D, after the control 230 is triggered, the function details page 200D may present detailed information of this function and an application channel using this function. The detailed information of the function may include, for example, an introduction of the function, a usage of the function, a participation mode of the function, a participation threshold of a function, and the like. The user may apply to activate this function by clicking on the control 235 for applying this function.

In some embodiments, the participation threshold of the function indicates that the user needs to satisfy a certain restriction condition to apply for this function. The restriction condition may be related to the user's personal information and/or the user's influence. For example, the user needs to satisfy a certain age limit and/or the user needs to satisfy a requirement of a certain number of fans (e.g., the number of fans is greater than one thousand), etc. After the user successfully activates this function, the user may enter the activity information posting page for collecting the media content via various manners in the application 120. In one manner, the user may enter the activity information posting page via its own profile page. For example, after the user successfully activates the function, the user may enter the activity information posting page by triggering the control 230 on the activity information posting page for collecting the media content. In another manner, the user may also enter the activity information posting page through a related page of first media content involved in the activity, and an example of this aspect will be described in detail below.

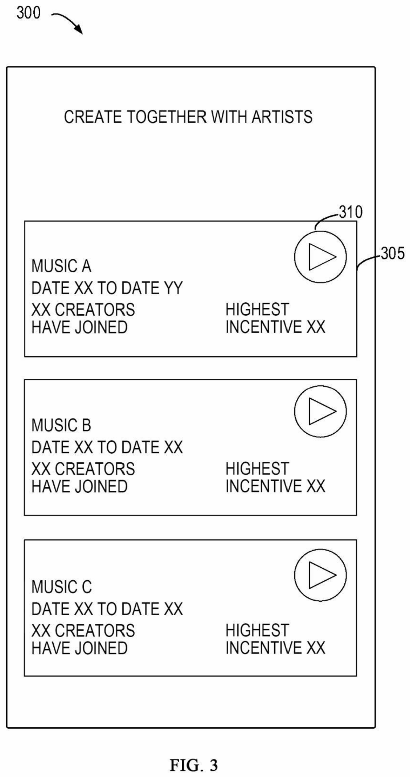

The activity information posting page is described below with reference to FIG. 3. FIG. 3 illustrates a schematic diagram of an activity information posting page 300 according to some embodiments of the present disclosure. As shown in FIG. 3, the activity information posting page 300 presents activity overview information of one or more activities in progress, wherein the one or more activities in progress may include activities for the first media content. The first media content may be any media content, for example, may be an audio, a video, a static or dynamic picture, a material template, a special effect, or the like. In this example, the activity overview information of one of the activities is presented in an area 305. Taking the example of the first media content being a song of an audio class, the activity overview information may include a song name (e.g., song A), start and end times of the activity (e.g., date XX to date YY), a number of creators that have joined in the activity (e.g., XXX creators), and highest benefit of the activity, etc.

A playback control 310 for a song may also be displayed in the area 305 presenting the activity summary information. The user may listen to a full or partial segment of the song A by triggering the playback control 310. In this way, the user can listen to the content of the song without clicking to enter a song details page in the activity information posting page, so as to select an appropriate song to participate in the activity. In this way, the number of page jumps in the activity may be reduced, and the user experience of selecting songs may be improved. In some embodiments, the activity information posting page 300 may also display an activity that the user has participated in, the activity that the user has participated in may be indicated in an area presenting the activity overview information of the activity, for example, a text, an icon, an image, or the like for representing "participated" is presented in the area.

In some embodiments, in the activity information posting page 300, if the user selects an activity for the first media content, for example, the user clicks on an area presenting the activity overview information, a first description page for the activity is presented. Information related to activity for the first media content may be displayed on the first description page, and thus the first description page may also be referred to as an "activity description page".

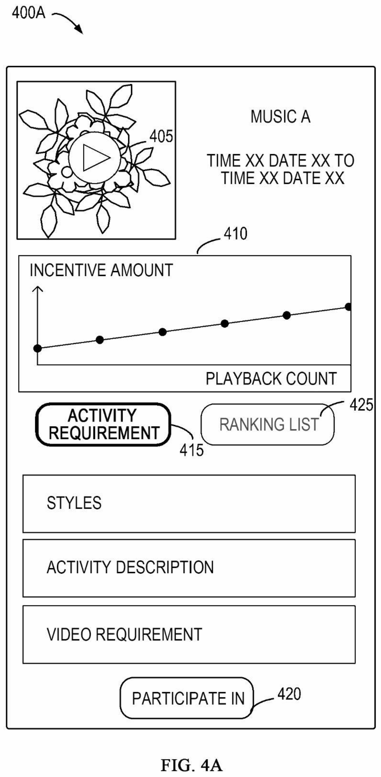

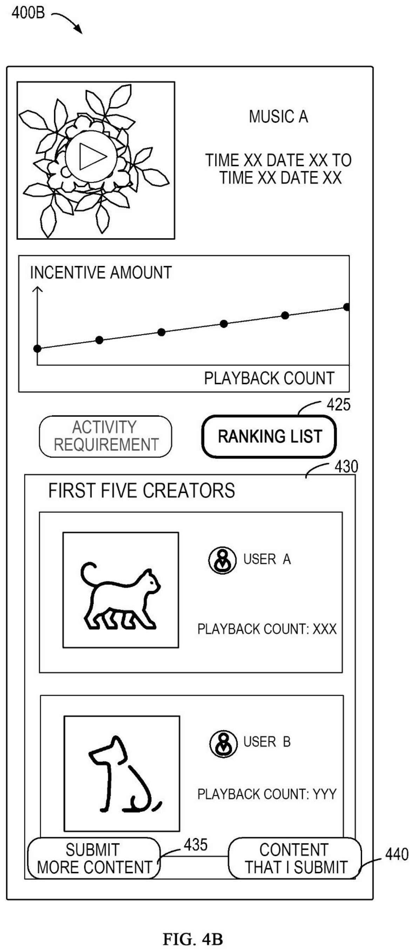

The activity description page will be described below with reference to FIGS. 4A and 4B. FIG. 4A illustrates a schematic diagram of an activity description page 400A according to some embodiments of the present disclosure. The activity description page 400A may be an example of the first description page. In the activity description page 400A, activity information related to the activity for the first media content and an interaction control for participating in the activity are presented. The activity information related to the activity for the first media content may include information related to an incentive mechanism. As shown in FIG. 4A, a schematic diagram of a relationship between a playback count and an incentive amount is displayed in an area 410 in the activity description page 400A. In this example, the number of incentives available to the user increases as the playback count of the media content of the activity that the user participated in increases, the number of incentives may be a value of the benefit available to the user, such as the number of tokens awarded, the level of the prize, etc. It should be understood that in the incentive mechanism of this example, the number of incentives is related to the playback count of the media content, but this is merely exemplary and the number of incentives may be related to any other suitable factor.

Alternatively or in addition, the activity information related to the activity for the first media content may include time information of the activity. The time information may include a start time and/or an end time of the activity, e.g., time XX date XX to time XX date XX. Alternatively or in addition, the activity information related to the activity for the first media content may include a requirement of the activity on submitted media content. For example, when a user triggers an activity requirement control 415, various requirements of the activity on the submitted media content will be presented. The activity requirement may include, for example, a style of the media content, description information of the activity, a specific requirement of the media content, and the like. The specific requirement of the media content may include a topic label required to be attached, a video length, special effects required to be used by a main language of a video and the main language of fans, and the like.

Alternatively or in addition, the activity information related to activity for the first media content may also include popularity of the media content that has been submitted to the activity. When the control 425 representing the ranking list on the activity description page 400A is triggered, information including the popularity of the media content that has been submitted to the activity may be presented. The popularity may include any metric capable of reflecting the popularity of the media content, for example, but not limited to, a number of times for which the media content is viewed, a number of comments received, a number of likes, a number of forwarding, and the like. FIG. 4B illustrates a schematic diagram of an activity description page 400B with respect to popularity information according to some other embodiments of the present disclosure. The activity description page 400B may be an example of the first description page presented in response to a trigger of the control 425 representing the ranking list in the page 400A. As shown in FIG. 4B, after the control 425 is triggered, the popularity information of the media content that has been submitted to the activity is presented in the area 430. The popularity information may include information of a creator in the front rank, for example, may include a video thumbnail, a user name, a playback count, a number of fans, a rank, and the like, and the rank may be sorted according to the playback count. In this example, the first five creators are presented in the area 430, and may be presented in the activity description page 400 in an order of ranking from high to low.

According to embodiments of the present disclosure, the activity information may integrate information of related activities that the user may be interested in, so as to effectively help the user obtain important information related to the activity. Further, the enthusiasm of users to participate in the activity is promoted through the incentive mechanism and presenting the popularity (e.g., ranking information) of the media content of the submitted activity, so as to attract more users to participate in the activity to improve the exposure degree of the activity, thereby improving the exposure degree of the first media content.

Also presented in the activity description page are the control 435 for entering the activities that more media content may be uploaded to participate in the activity displayed on the page, and a control 440 for entering the media content that the user submits by himself/herself. For example, when the control 435 is triggered, a user interface may jump to a page for uploading more media content to participate in the activity, and when the control 440 is triggered, the user interface may jump to a page for displaying the media content that the user has submitted to the activity.

With continued reference to FIG. 4A, as shown in FIG. 4A, the activity description page 400 further illustrates an example of the interaction control 420 for participating in the activity, and the user may join the activity corresponding to the activity description page 400 by triggering the interaction control 420.

In some embodiments, a playback control for the first media content is presented in the same user interface (e.g., a first description page) as the activity information and the interaction control. In the example of FIG. 4A, an illustrative playback control 405 for the first media content is presented in the activity description page 400. The first media content or a preset segment is played in response to a trigger operation by the user on the playback control. In this example, the preset segment or a full audio of the song A will be played through the trigger of playback control 405.

Embodiments of participating in an activity via a profile page of a user are described above. Alternatively or in addition, in some embodiments, the user may learn and participate in the activity through a description page (also referred to as a content description page) for the first media content. In the content description page, activity information related to the activity for the first media content and an interaction control for participating in the activity are displayed. The content description page may be used to present various information related to the first media content. For example, when the first media content is music, the content description page may be a music details page.

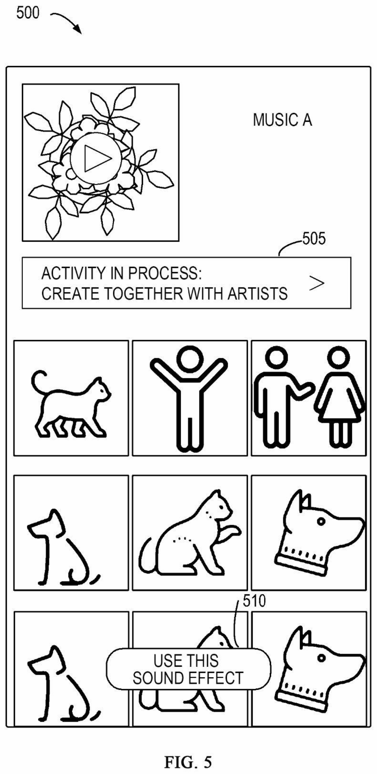

FIG. 5 illustrates a schematic diagram of a content description page 500 according to some embodiments of the present disclosure. As shown in FIG. 5, the illustrative content description page 500 is a details page for the first media content. In this example, the first media content is a song A, that is, a second description page 500 is a page corresponding to the song A. An entry control 505 for the activity description page may also be presented in the content description page 500. Specifically, the activity description page is presented in response to a trigger operation by a user on the entry control 505. For example, when the user clicks on the entry control 505, the content description page 500 jumps to the activity description page. According to the embodiment of the invention, the activity related to the first media content may be efficiently fused on the page of the first media content through presenting the activity related to the first media content on the page presenting the first media content, thereby improving the exposure degree and the participation degree of the activity.

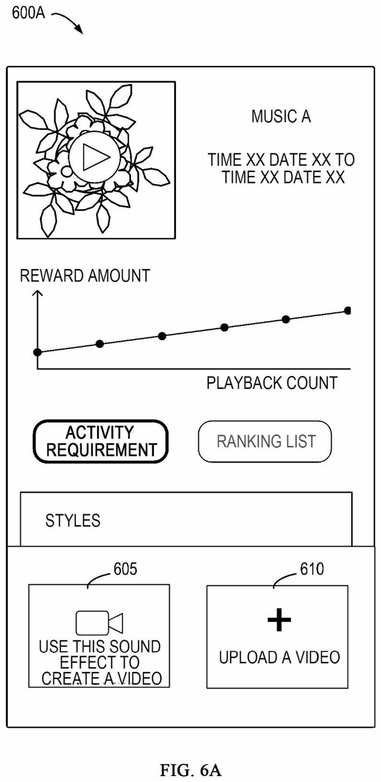

In some embodiments, in response to the interaction control 420 for participating in the activity being triggered, a content shooting page associated with a preset segment of the first media content is presented. For example, in response to a trigger operation on the interaction control 420 for participating in the activity, a control for content uploading is presented. In response to a selection of the content upload control, the content shooting page is presented. FIG. 6A illustrates a schematic diagram of a control for content uploading according to some embodiments of the present disclosure. As shown in FIG. 6A, the content shooting page 600A includes a control 605 for creating a media content using the first media content, and a control 610 for uploading the media content. In response to the control 605 being triggered by a user, a corresponding content shooting page is presented. The content shooting page may be associated with a preset segment of the first media content, the preset segment may be all or a portion of content in the first media content, for example, the preset segment may be a prelude music of the song A. The content shooting page is associated with the first media content may mean that a portion of the first media content is displayed in the content shooting page, or that the first media content is played while the content shooting page is presented. In short, the first media content may be a portion of the shot page.

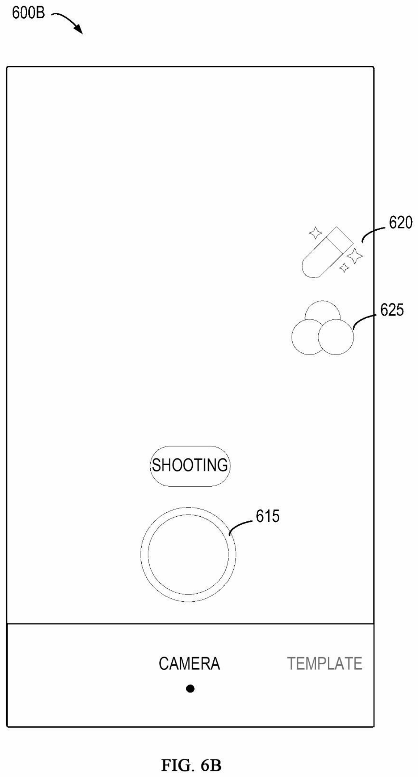

FIG. 6B illustrates a schematic diagram of a content shooting page 600B according to some embodiments of the present disclosure. Based on the interaction operation by the user in the content shooting page 600B, a second media content including the preset segment may be posted. For example, the interaction operation may include at least one of shooting, using special effects, uploading, and posting. As shown in FIG. 6B, a control 615 for shooting is presented in the content shooting page 600B, and in response to the trigger of the control 615 for shooting, the application 120 starts a shooting function in the application.

Alternatively or in addition, in some embodiments, the interaction operation may include using a special effect. Specifically, options for a plurality of preset special effects are displayed in the content shooting page. In response to a selection of at least one of the plurality of preset special effects, the at least one preset special effect is added to the second media content. The preset special effect may be any content that may be added to the second media content, for example, an icon, an emoticon package, a portrait beautification, a filter, a dynamic effect, and the like. In the example of FIG. 6B, a preset special effect 620 and a special effect 625 are presented in the content shooting page 600B. The special effect 620 is, for example, a portrait beautification function, and the portrait beautification function will be applied to the second media content in response to the selection of the special effect 620. The special effect 625 is, for example, a filter function, and in response to a selection of the special effect 625, at least one candidate filter is presented for the user to select a suitable filter therefrom and apply the filter to the second media content. The selection of the special effect by the user may be, for example, a personalized requirement, or may be to satisfy a specific requirement for the media content in the activity description page. In particular, in some embodiments, the options of one or more special effects specified in the activity requirements may be displayed in a direct or highlight manner in the content shooting page. In this way, the user can be reminded to satisfy the activity requirement, and the user can conveniently add special effects.

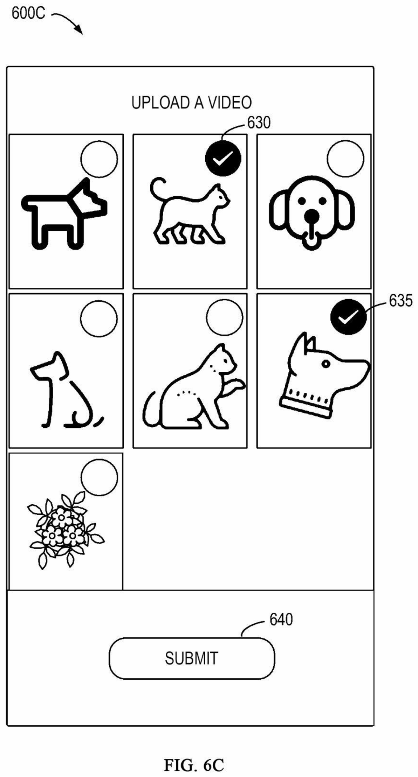

With continued reference to FIG. 6A, in response to triggering a control 610 for uploading a media content by a user, a content selection page for posted media content is presented. FIG. 6C illustrates a schematic diagram of a content selection page 600C of a posted media content of a user according to some embodiments of the present disclosure. As shown in FIG. 6C, the media content that the user has posted into the application 120 is presented in the content selection page 600C. The posted media content may include second media content generated and posted by the user to the application 120 through the content shooting page, which may be visible only to the user himself/herself or publicly posted to the application 120.

In some embodiments, in response to a selection of the second media content, the second media content is submitted to a corresponding activity. For example, in response to a selection block 630 and a selection block 635 corresponding to the posted media content being selected and the control 640 for submission is triggered, the selected media content is submitted to the corresponding activity.

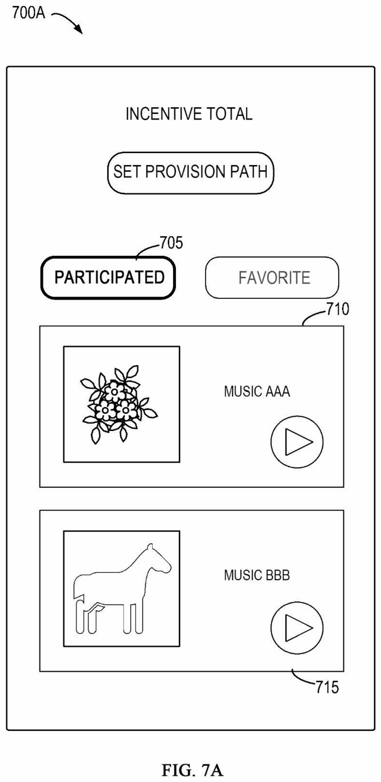

In some embodiments, activity overview information related to one or more activities that the user has participated in may also be presented in the application 120. FIG. 7A illustrates a schematic diagram of an activity overview page 700A according to some embodiments of the present disclosure. As shown in FIG. 7A, in the activity overview page 700A, in response to the control 705 for presenting the participated activity is triggered, relevant information of the activity the user has participated in is displayed, for example, activity overview information 710 about a song AAA that the user has participated in, and activity overview information 715 about a song BBB that the user has participated in. Alternatively or in addition, the activity overview information includes a respective identifier of one or more activities. The identifier of the activity may be used to distinguish different activities, for example, may be a name of a song, a unique identifier of an activity, or the like.

Alternatively or in addition, the activity overview information includes respective states of one or more activities. The status of the activity may be used to indicate a stage in which the user is in the activity, for example, the activity is still ongoing, an activity benefit is in settlement, the activity has ended, and the like. Alternatively or in addition, the activity overview information may further include respective incentives obtained through one or more activities. For example, benefits, prizes, honor, and the like obtained from the activities that the user participates in.

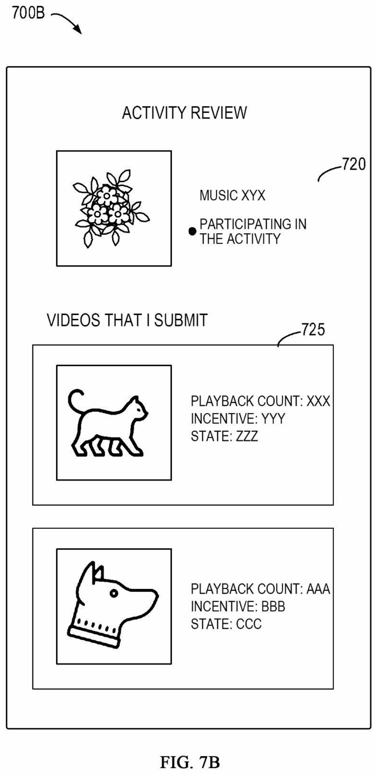

In some embodiments, in the application 120, submission overview information related to one or more media contents that a user has submitted is presented. FIG. 7B illustrates a schematic diagram of a submission overview page 700B according to some embodiments of the present disclosure. As shown in FIG. 7B, in the submission overview page 700B that includes the submission overview information, information 720 of an activity that is currently participated in and the media content information 725 that the user has submitted are presented. Alternatively or in addition, the submission overview information presented in the submission overview page 700B may include an overall popularity of the one or more media contents, for example, a sum of playback count of one or more media contents that the user has submitted, a maximum playback count of a single media content, a sum of the number of likes obtained, a number of likes obtained by the single media content, a sum of the number of times of favorite, or a sum of the number of times that the single media content is favorite, etc. Alternatively or in addition, the submission overview information presented in the submission overview page 700B may include a respective popularity of one or more media contents, for example, a popularity of each of the one or more media contents, such as a playback count, a number of likes, or a number of favorite of each media content.

Alternatively or in addition, the submission overview information presented in the submission overview page 700B may include an overall incentive obtained through the one or more media contents, for example, a sum of benefits, a total number of prizes, or a highest honor, and the like obtained by the user. Alternatively or in addition, the submission overview information presented in the submission overview page 700B may include respective incentives obtained by the one or more media contents, for example, benefits, prizes, or honor, and the like of each of the one or more media contents. Alternatively or in addition, the submission overview information presented in the submission overview page 700B may include a respective submission status of the one or more media contents, which may be, for example, submitted, being reviewed, or submission failed, or the like.

In some embodiments, in the application 120, a setting page related to incentives for participating in the activity is presented via the activity information posting page. For example, the activity information posting page may refer to the page 300 shown in FIG. 3. For example, the setting page related to the incentive for participating in the activity is presented in response to the control for setting an activity incentive receiving manner in the activity information posting page.

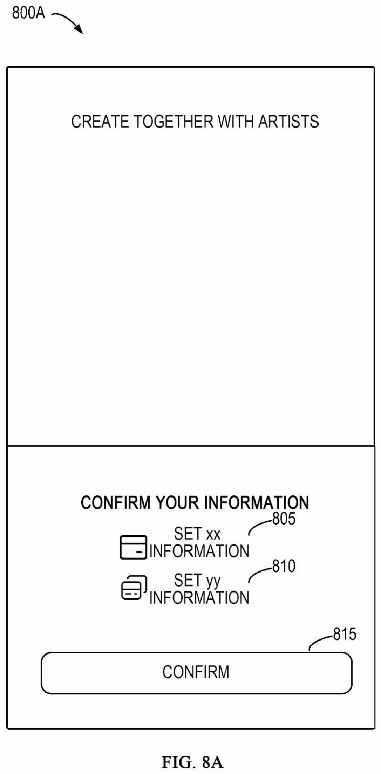

FIG. 8A illustrates a schematic diagram of a setting page 800A related to incentives for participating in an activity according to some embodiments of the present disclosure. As shown in FIG. 8A, in the setting page 800A, a control indicating a provision path of an incentive is presented, for example, a control 810 for setting to be related to xx information of the provision path, and a control 810 for setting to be related to yy information of the provision path. The application 120 may receive a user input indicating the provision path of an incentive via the setting page 800A. Specifically, in response to the user triggering the control 805 and the control 810 and inputting the provision path of an incentive on a corresponding interface triggered by the control, the setting page 800A receives a user input indicating the provision path of an incentive. In response to a trigger operation on the control 815 for confirming the provision path of the incentive, a checking page for the provision path of the incentive may be entered.

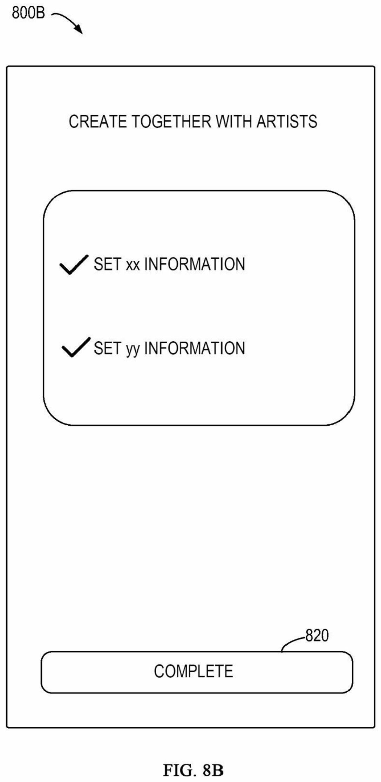

FIG. 8B illustrates a schematic diagram of an inspection page 800B for a provision path of an incentive according to some embodiments of the present disclosure. As shown in FIG. 8B, in the inspection page 800B, an identifier indicating whether the provision path of the incentive is provided is displayed. In response to the provision path of the incentive being successfully provided, an identifier to indicate successful provision is presented. For example, in response to the xx information is successfully provided, an identifier indicating the successful provision is presented. In response to the yy information is successfully provided, an identifier indicating the successful provision is presented. For example, the identifier indicating the successful provision may be a symbol "hook". Accordingly, in response to the provision path of the incentive being failed in provision, an identifier indicating the failure in provision is presented. The identifier indicating the failure in provision may be a cross. In this example, after the provision path of the incentive is successfully provided, the setting of the provision path of the incentive may be completed by a trigger of the control 820 indicating the completion.

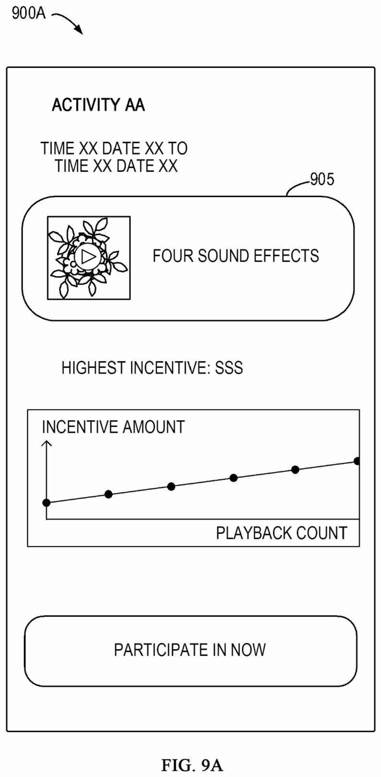

In the embodiments described above, the activity is conducted for the single media content. In some embodiments, a single activity may be for a plurality of media contents, for example, a plurality of songs. That is, the first media content may be one of the plurality of media contents, and the activity may involve the plurality of media contents. FIG. 9A illustrates a schematic diagram of an activity page 900A presenting activities for a plurality of media contents according to some embodiments of the present disclosure. As shown in FIG. 9A, information for an activity AA for 4 audios is presented in the activity page 900A. Options for the plurality of media contents are presented in response to a trigger operation by a user on the interaction control. For example, in response to a trigger of the interaction control 905 by the user, a page for presenting media content options is entered.

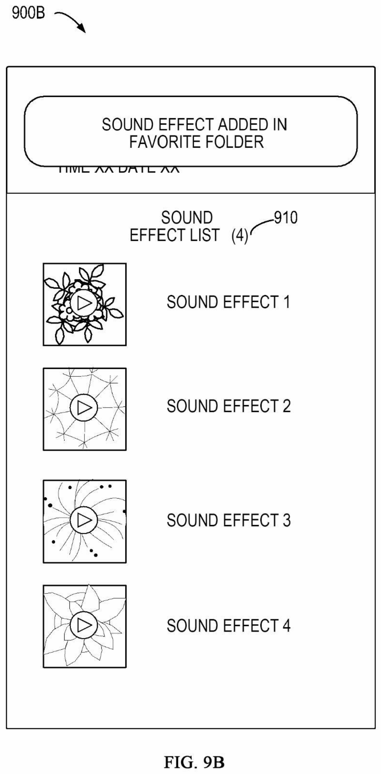

FIG. 9B illustrates a schematic diagram of a page 900B for presenting media content options according to some embodiments of the present disclosure. As shown in FIG. 9, information of a plurality of media contents included in the activity is presented in the page 900B, for example, a list of 4 sound effects for participating in the activity. In some embodiments, in response to the first media content being selected, a content shooting page associated with the first media content is presented. Specifically, the content shooting page is presented in response to an option for the first media content being selected. The content shooting page may be, for example, the content shooting page 600B shown in FIG. 6B.

In some embodiments, a preset segment used in the shot media content may be one of a plurality of preset segments of the first media content. That is, the activity may involve a plurality of preset segments of the first media content. In response to the trigger operation by the user on the interaction control, options for the plurality of preset segments are presented. Referring to FIG. 9A, the 4 audios included in the activity AA presented in the activity page 900A may be 4 preset segments. In response to the preset segment being selected, the content shooting page is presented. The content shooting page may be, for example, the content shooting page 600B shown in FIG. 6B.

As mentioned above, an incentive mechanism may be set for the activity. Users participating in the activity may obtain corresponding incentives. Taking the second media content being a video as an example, in some embodiments, after the activity expires, video data of the user participating in the activity is counted, so that the incentive amount may be determined by settlement data. During a settlement process of the video data, objective data and subjective data of a video may be counted, and the objective data may include, but is not limited to, the number of times for which the video is viewed, the number of likes, and the generated business amount (e.g., sold concert tickets). The subjective data may include a subjective comment of a video by the user, for example, a score by a particular viewer on the creation of the video.

After the settlement is completed, the application 120 may provide an incentive to the user for the second media content posted by the user. Specifically, after the activity ends, related information of the second media content provided by each user participating in the activity will be counted to determine the second media content that requires incentives. Alternatively or in addition, the incentive is related to the number of times for which the second media content is viewed, that is, the related information of the second media content may include the number of times of viewing, and the number of times of viewing of the second media content may be counted after the activity ends, for example, the more the number of times of viewing is, the more the incentives are.

Alternatively or in addition, the incentive may be related to the number of positive feedback for the second media content, that is, the related information of the second media content may include the number of positive feedbacks for the second media content, the number of positive feedbacks for the second media content may be counted after the activity ends, where the number of positive feedbacks may be, for example, the number of likes received, the number of received good comments, the number of times of being forwarded, etc.

Alternatively or in addition, the incentive may also be related to the number of times for which the second media content is favorited , that is, the related information of the second media content may include the number of times for being favorited, and the number of times for which the second media content is favorited may be counted after the activity ends, for example, the more the number of times of being favorited, the more the incentives are.

### Example Processes, Apparatus, and Device

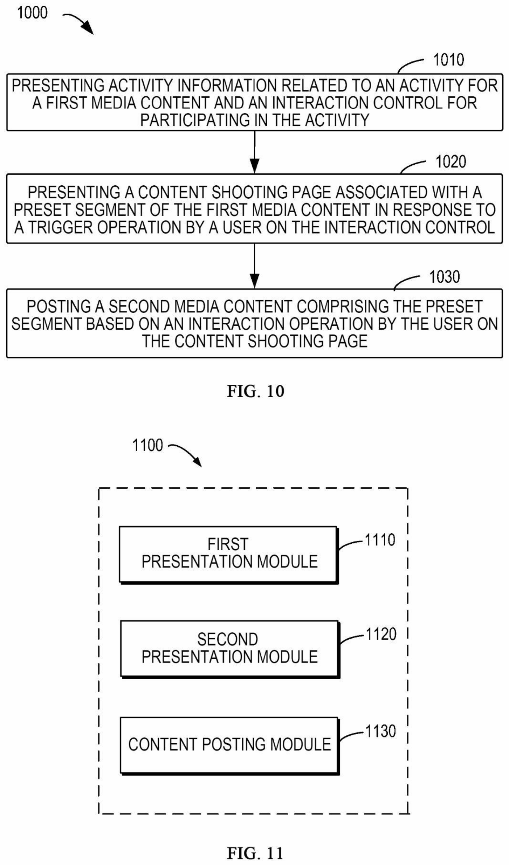

FIG. 10 illustrates a flowchart of a media interaction process 1000 according to some embodiments of the present disclosure. The process 1000 may be implemented at an electronic device 110. For ease of discussion, the process 1000 will be described with reference to the environment 100 of FIG. 1.

At block 1010, the electronic device 110 presents activity information related to an activity for a first media content and interaction controls for participating in the activity.

At block 1020, the electronic device 110 presents a content shooting page associated with a preset segment of the first media content in response to a trigger operation by a user on the interaction control.

At block 1030, the electronic device 110 posts second media content including the preset segment based on the interaction operation by the user on the content shooting page.

In some embodiments, the process 1000 may further include presenting a content selection page for a posted media content; and submitting the second media content to the activity in response to a selection of the second media content.

In some embodiments, the first media content is one of a plurality of media contents, and presenting the content shooting page associated with the preset segment includes: presenting options for the plurality of media contents in response to the trigger operation; and presenting the content shooting page in response to the first media content being selected.

In some embodiments, the preset segment is one of a plurality of preset segments of the first media content, and presenting the content photographing page associated with the preset segment includes: presenting options for the plurality of preset segments in response to the trigger operation; and presenting the content photographing page in response to the preset segment being selected.

In some embodiments, posting the second media content including the preset segment includes: displaying options for a plurality of preset special effects in the content shooting page; and adding at least one preset special effect to the second media content in response to a selection of the at least one preset special effect of the plurality of preset special effects.

In some embodiments, the process 1000 may further include: presenting a playback control for the first media content in a user interface same as the activity information and the interaction control; and playing the first media content or the preset segment in response to a trigger operation by the user on the playback control.

In some embodiments, the activity information and the interaction control are displayed in at least one of: a first description page for the activity, or a second description page for the first media content.

In some embodiments, an entry control for the first description page is displayed in the second description page, and the method further includes: presenting the first description page in response to a trigger operation by the user on the entry control.

In some embodiments, the activity information displayed in the first description page includes at least one of: time information of the activity, an incentive mechanism of the activity, a requirement of the activity for a submitted media content, or popularity of a media content that has been submitted to the activity.

In some embodiments, the process 1000 may further include presenting, via a profile page of the user, an activity information posting page for the collecting of media contents, activity overview information of one or more activities in progress being displayed in the activity information posting page, the one or more activities in progress comprising the activity for the first media content; and presenting the first description page in response to a selection of the activity for the first media content.

In some embodiments, the process 1000 may further include: presenting, via the activity information posting page, a setting page related to an incentive for participating in the activity; and receiving, via the setting page, a user input indicating a provision path of the incentive.

In some embodiments, the process 1000 may further include presenting activity overview information related to one or more activities that the user has participated in, the activity overview information comprising at least one of: respective identities of the one or more activities, respective states of the one or more activities, respective incentives obtained by the one or more activities.

In some embodiments, the process 1000 may further include presenting submission overview information related to one or more media contents that the user has submitted, the submission overview information comprising at least one of: an overall popularity of the one or more media contents, an overall incentive obtained by the one or more media contents, respective popularities of the one or more media contents, respective incentives obtained by the one or more media contents, or respective submitted states of the one or more media contents.

In some embodiments, the process 1000 may further include: providing an incentive for the second media content after the activity expires, the incentive being related to at least one of: a number of times for which the second media content is viewed, a number of positive feedbacks for the second media content, or a number of times for which the second media content is favorited.

FIG. 11 shows a block diagram of a media interaction apparatus 1100 according to some embodiments of the present disclosure. The apparatus 1100 may be implemented or included in the electronic device 110. The various modules/components in the apparatus 1100 may be implemented by hardware, software, firmware, or any combination thereof.

As shown in FIG. 11, the apparatus 1100 includes a first presentation module 1110 configured to present activity information related to an activity for a first media content and an interaction control for participating in the activity. The apparatus 1100 further includes a second presenting module 1120 configured to present a content shooting page associated with a preset segment of the first media content in response to a trigger operation by a user on the interaction control. The apparatus 1100 further includes a content publishing module 1130 configured to post a second media content comprising the preset segment based on an interaction operation by the user on the content shooting page.

In some embodiments, the apparatus 1100 may further include a third presentation module configured to present a content selection page for a posted media content; and submit the second media content to the activity in response to a selection of the second media content.

In some embodiments, the first media content is one of a plurality of media contents, and the second presentation module 1120 is further configured to present options for the plurality of media contents in response to the trigger operation; and present the content shooting page in response to the first media content being selected.

In some embodiments, the preset segment is one of a plurality of preset segments of the first media content, and the second presenting module 1120 is further configured to present options for the plurality of preset segments in response to the trigger operation; and present the content shooting page in response to the preset segment being selected.

In some embodiments, the content posting module 1130 is further configured to display options for a plurality of preset special effects in the content shooting page; and add at least one preset special effect to the second media content in response to a selection of the at least one preset special effect of the plurality of preset special effects.

In some embodiments, the apparatus 1100 may further include a content playback module configured to present a playback control for the first media content in a user interface same as the activity information and the interaction control; and play the first media content or the preset segment in response to a trigger operation by the user on the playback control.

In some embodiments, the activity information and the interaction control are displayed in at least one of: a first description page for the activity, or a second description page for the first media content.

In some embodiments, the apparatus 1100 may further include a fourth presentation module configured to present the first description page in response to a trigger operation by the user on the entry control.

In some embodiments, the activity information displayed in the first description page includes at least one of: time information of the activity, an incentive mechanism of the activity, a requirement of the activity on the submitted media content, or popularity of a media content that has been submitted to the activity.

In some embodiments, the first presentation module may be further configured to present, via a profile page of the user, an activity information posting page for collecting media contents, activity overview information of one or more activities in progress being displayed in the activity information posting page, the one or more activities in progress comprising the activity for the first media content; and present the first description page in response to a selection of the activity for the first media content.

In some embodiments, the apparatus 1100 may further include an incentive setting module configured to present, via the activity information posting page, a setting page related to an incentive for participating in the activity, and receive, via the setting page, a user input indicating a provision path of the incentive.

In some embodiments, the apparatus 1100 may further include a first overview information presentation module configured to present activity overview information related to one or more activities that the user has participated in, the activity overview information comprising at least one of: respective identities of the one or more activities, respective states of the one or more activities, respective incentives obtained by the one or more activities.

In some embodiments, the apparatus 1100 may further include a second overview information presentation module configured to submission overview information related to one or more media contents that the user has submitted, the submission overview information comprising at least one of: an overall popularity of the one or more media contents, an overall incentive obtained by the one or more media contents, respective popularities of the one or more media contents, respective incentives obtained by the one or more media contents, or respective submitted states of the one or more media contents.

In some embodiments, the apparatus 1100 may further include an incentive providing module configured to provide an incentive for the second media content after the activity expires, the incentive being related to at least one of: a number of times for which the second media content is viewed, a number of positive feedbacks for the second media content, or a number of times for which the second media content is favorited.

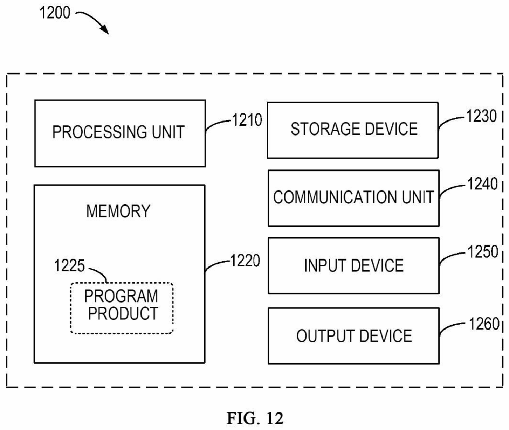

FIG. 12 illustrates a block diagram illustrating an electronic device 1200 in which one or more embodiments of the present disclosure may be implemented. It should be understood that the electronic device 1200 illustrated in FIG. 12 is merely illustrative and should not constitute any limitation on the function and scope of the embodiments described herein. The electronic device 1200 shown in FIG. 12 may be configured to implement the electronic device 110 in FIG. 1.

As shown in FIG. 12, the electronic device 1200 is in the form of a general-purpose electronic device. Components of the electronic device 1200 may include, but are not limited to, one or more processors or processing units 1210, a memory 1220, a storage device 1230, one or more communication units 1240, one or more input devices 1250, and one or more output devices 1260. The processing unit 1210 may be an actual or virtual processor and capable of performing various processes according to programs stored in the memory 1220. In multiprocessor systems, multiple processing units execute computer-executable instructions in parallel to improve parallel processing capabilities of the electronic device 1200.

The electronic device 1200 typically includes a plurality of computer storage media. Such media may be any available media accessible to the electronic device 1200, including, but not limited to, volatile and non-volatile media, removable and non-removable media. The memory 1220 may be volatile memory (e.g., registers, caches, random access memory (RAM)), non-volatile memory (e.g., read-only memory (ROM), electrically erasable programmable read-only memory (EEPROM), flash memory), or some combination thereof. The storage device 1230 may be a removable or non-removable medium and may include a machine-readable medium, such as a flash drive, a magnetic disk, or any other medium, which may be capable of storing information and/or data (e.g., training data for training) and may be accessed within the electronic device 1200.

The electronic device 1200 may further include additional removable/non-removable, volatile/non-volatile storage media. Although not shown in FIG. 12, a disk drive for reading from or writing to a removable, nonvolatile magnetic disk (e.g., a "floppy disk") and an optical disk drive for reading from or writing to a removable, nonvolatile optical disk may be provided. In these cases, each drive may be connected to a bus (not shown) by one or more data media interfaces. The memory 1220 may include a computer program product 1225 having one or more program modules configured to perform various methods or actions of various embodiments of the present disclosure.

The communication unit 1240 enables to communicate with another electronic device through a communication medium. Additionally, the functionality of components of the electronic device 1200 may be implemented in a single computing cluster or multiple computing machines which are capable of communication over a communication connection. Thus, the electronic device 1200 may operate in a networked environment using logical connections with one or more other servers, network personal computers (PC), or another network node.

The input device 1250 may be one or more input devices such as a mouse, a keyboard, a trackball, or the like. The output device 1260 may be one or more output devices, such as a display, a speaker, a printer, or the like. The electronic device 1200 may also communicate with one or more external devices (not shown) through the communication unit 1240 as needed, external devices such as storage devices, display devices, etc., communicate with one or more devices that enable a user to interact with the electronic device 1200, or communicate with any device (e.g., a network card, a modem, etc.) that enables the electronic device 1200 to communicate with one or more other electronic devices. Such communication may be performed via an input/output (I/O) interface (not shown).

According to example implementations of the present disclosure, there is provided a computer-readable storage medium having computer-executable instructions stored thereon, where the computer-executable instructions are executed by a processor to implement the method described above. According to example implementations of the present disclosure, a computer program product is further provided, the computer program product being tangibly stored on a non-transitory computer-readable medium and including computer-executable instructions, the computer-executable instructions being executed by a processor to implement the method described above.

Aspects of the present disclosure are described herein with reference to flowcharts and/or block diagrams of methods, apparatuses, devices, and computer program products implemented in accordance with the present disclosure. It should be understood that each block of the flowchart and/or block diagram, and combinations of blocks in the flowcharts and/or block diagrams, may be implemented by computer readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce means to implement the functions/acts specified in the flowchart and/or block diagram. These computer-readable program instructions may also be stored in a computer-readable storage medium that cause the computer, programmable data processing apparatus, and/or other devices to function in a particular manner, such that the computer-readable medium storing instructions includes an article of manufacture including instructions to implement aspects of the functions/acts specified in the flowchart and/or block diagram(s).

The computer-readable program instructions may be loaded onto a computer, other programmable data processing apparatus, or other apparatus, such that a series of operational steps are performed on a computer, other programmable data processing apparatus, or other apparatus to produce a computer-implemented process such that the instructions executed on a computer, other programmable data processing apparatus, or other apparatus implement the functions/acts specified in the flowchart and/or block diagram block or blocks.

The flowchart and block diagrams in the drawings show architecture, function, and operation of possible implementations of systems, methods, and computer program products according to various implementations of the present disclosure. In this regard, each block in the flowchart or block diagram may represent a module, a program segment, or a portion of an instruction that includes one or more executable instructions for implementing the specified logical function. In some alternative implementations, the functions noted in the blocks may also occur in a different order than noted in the drawings. For example, two consecutive blocks may actually be performed substantially in parallel, which may sometimes be performed in the reverse order, depending on the function involved. It is also noted that each block in the block diagrams and/or flowchart, as well as combinations of blocks in the block diagrams and/or flowchart, may be implemented with a dedicated hardware-based system that performs the specified functions or actions, or may be implemented in a combination of dedicated hardware and computer instructions.

Various implementations of the present disclosure have been described above, which are illustrative, not exhaustive, and are not limited to the implementations disclosed. Many modifications and variations will be apparent to those of ordinary skill in the art without departing from the scope and spirit of the various implementations illustrated. The selection of the terms used herein is intended to best explain the principles of the implementations, practical applications, or improvements to techniques in the marketplace, or to enable others of ordinary skill in the art to understand the various implementations disclosed herein.

## Claims

1. A method for media interaction comprising:
presenting activity information related to an activity for a first media content and an interaction control for participating in the activity;
presenting a content shooting page associated with a preset segment of the first media content in response to a trigger operation by a user on the interaction control; and
posting second media content including the preset segment based on an interaction operation by the user on the content shooting page.

2. The method of claim 1, further comprising:
presenting a content selection page for a posted media content; and
submitting the second media content to the activity in response to a selection of the second media content.

3. The method of claim 1, wherein the first media content is one of a plurality of media contents, and presenting the content shooting page associated with the preset segment comprises:
presenting options for the plurality of media contents in response to the trigger operation; and
presenting the content shooting page in response to the first media content being selected.

4. The method of any of claims 1 to 3, wherein the preset segment is one of a plurality of preset segments of the first media content, and presenting the content shooting page associated with the preset segment comprises:
presenting options for the plurality of preset segments in response to the trigger operation; and
presenting the content shooting page in response to the preset segment being selected.

5. The method of any of claims 1 to 3, wherein posting the second media content including the preset segment comprises:
displaying options for a plurality of preset special effects in the content shooting page; and
adding at least one preset special effect to the second media content in response to a selection of the at least one preset special effect of the plurality of preset special effects.

6. The method of any of claims 1 to 3, further comprising:
presenting a playback control for the first media content in a user interface same as the activity information and the interaction control; and
playing the first media content or the preset segment in response to a trigger operation by the user on the playback control.

7. The method of any of claims 1 to 3, wherein the activity information and the interaction control are displayed in at least one of:
a first description page for the activity, or
a second description page for the first media content.

8. The method of claim 7, wherein an entry control for the first description page is displayed in the second description page, and the method further comprises:
presenting the first description page in response to a trigger operation by the user on the entry control.

9. The method of claim 7, wherein the activity information displayed in the first description page comprises at least one of:
time information of the activity,
an incentive mechanism of the activity,
a requirement of the activity for a submitted media content, or
popularity of a media content that has been submitted to the activity.

10. The method of claim 7, further comprising:
presenting, via a profile page of the user, an activity information posting page for collecting media contents, activity overview information of one or more activities in progress being displayed in the activity information posting page, the one or more activities in progress including the activity for the first media content; and
presenting the first description page in response to a selection of the activity for the first media content.

11. The method of claim 10, further comprising:
presenting, via the activity information posting page, a setting page related to an incentive for paticipating in the activity; and
receiving, via the setting page, a user input indicating a provision path of the incentive .

12. The method of claim 1, further comprising:
presenting activity overview information related to one or more activities that the user has participated in, the activity overview information comprising at least one of:
respective identities of the one or more activities,
respective states of the one or more activities,
respective incentives obtained by the one or more activities.

13. The method of any of claims 1 to 11, further comprising:
presenting submission overview information related to one or more media contents that the user has submitted, the submission overview information comprising at least one of:
an overall popularity of the one or more media contents,
an overall incentive obtained by the one or more media contents,
respective popularities of the one or more media contents,
respective incentives obtained by the one or more media contents, or
respective submitted states of the one or more media contents.

14. The method of any of claims 1 to 11, further comprising:
providing an incentive for the second media content after the activity expires, the incentive being related to at least one of:
a number of times for which the second media content is viewed,
a number of positive feedbacks for the second media content, or
a number of times for which the second media content is favorited.

15. An apparatus for media interaction, comprising:
a first presentation module configured to present activity information related to an activity for a first media content and an interaction control for participating in the activity;
a second presentation module configured to present a content shooting page associated with a preset segment of the first media content in response to a trigger operation by a user on the interaction control; and
a content posting module configured to post a second media content comprising the preset segment based on an interaction operation by the user on the content shooting page.

16. An electronic device comprising:
at least one processing unit; and
at least one memory coupled to the at least one processing unit and storing instructions for execution by the at least one processing unit, the instructions, when executed by the at least one processing unit, causing the electronic device to perform the method of any of claims 1 to 14.

17. A computer-readable storage medium having stored thereon a computer program executable by a processor to implement the method of any of claims 1 to 14.
